# EUROPEAN PATENT APPLICATION

(11) **EP 4 575 278 A1**
(43) Date of publication of application: **25.06.2025**
(21) Application number: 24222175.2
(22) Date of filing: 20.12.2024
(51) Int. Cl.: F16K 1/22, F16K 25/00, B01D 35/04, G01N 30/00

(54) **CHROMATOGRAPHIC COLUMN VALVE AND RELATED CHROMATOGRAPHIC COLUMN**

(30) Priority: 22.12.2023 IT 202300027768
(71) Applicant: Masterinox S.r.l., 20026 Novate Milanese (MI) (IT)
(72) Inventor: CASERINI, Marco, 20004 Arluno (MI) (IT)
(74) Representative: Montebelli, Marco

(57) **Abstract**

A butterfly valve for a chromatographic column comprises a body (2) provided with a disc (4), rotatably constrained to the body (2), with a fixed perimeter element (3) delimiting the disc (4) and with at least a seal positioned between the perimeter element (3) and the disc (4), wherein the body (2) is connected to means (5) of actuation of the valve (1), wherein the disc (4) comprises a filter net (10).

## Description

The present invention relates to a valve for a chromatographic column and the related chromatographic column.

In the pharmaceutical field, most tablets on the market are formulations, i.e. complex mixtures, that comprise various chemical substances carefully designed for a specific use. These tablets may contain additional ingredients, such as flavorings, which may be used to mask a bitter taste, coatings to facilitate swallowing, and binding agents.

In the production and analysis of pharmaceuticals, it is often necessary to isolate the active ingredient, separate mixtures, isolate metabolites, remove impurities, or identify an analyte. These results can be achieved in various ways, such as through widely used chromatography processes designed to separate the individual components of a soluble mixture.

In general, in chromatography processes, a solvent, called the mobile phase, is used to dissolve a sample of a soluble mixture and to transport the mixture through an adsorbent solid, referred to as the stationary phase. In this way, the mixture is separated and the active ingredient is isolated: some components of the mixture are transported by the solvent through the solid more quickly than others.

A particularly useful type of process is column chromatography, characterized by the stationary phase generally consisting of silica; in this process, the mixture is transported through a vertical column using the solvent, also referred to as the eluent.

Specifically, once the silica is saturated with the solvent, the mixture of samples or analyte is poured into the top of the column, followed by the solvent; the bottom valve is opened, allowing the solvent to transport the sample through the silica, and the eluent that exits through the valve is collected.

After being in contact with certain active pharmaceutical ingredients, such as steroids, antitumor drugs, or contraceptives for women, the silica becomes active.

In the state of art, after several treatment cycles, there is a step for restoring the column and replacing the silica to dispose of the exhausted material. This operation can be performed in various ways, such as overturning the column, installing a discharge cone near the bottom of the column and emptying the residual material into a drum, disassembling the lower portion of the column to remove the residue from the bottom, or drying and vacuuming the silica. Therefore, this operation requires the supervision and involvement of at least one operator.

A problem with chromatographic columns of the state of the art is that even minimal contact with active silica is harmful to humans due to the high concentration of hormones, especially for female operators, who are therefore unable to oversee this process. Male operators must use appropriate safety equipment, such as gloves, masks, and chemical protective suits. This makes such tasks extremely inconvenient and hazardous to the operators' health.

The purpose of the present invention is, therefore, to overcome the aforementioned drawbacks.

The invention, as characterized by the claims, achieves this goal through an additional component installed in the column.

The main advantage of the present invention lies in the possibility to safely and reliably replace the silica within a chromatographic column.

Additionally, the invention allows for supervision by operators who do not need to wear protective equipment.

Furthermore, the invention enables the restoration of the chromatographic column and the replacement of the silica in a closed-loop system.

Moreover, the invention allows the placement of the chromatographic column in environments without additional safety measures, such as hoods and valves.

Additionally, the invention enables the washing and sterilization of the chromatographic column.

Further advantages and features of the present invention will become more apparent in the detailed description below, with reference to the accompanying figures, which illustrate a non limiting embodiment, in which:
- Figure 1 shows a top view of the invention;
- Figure 2 shows a top view of a first detail of the invention;
- Figure 3 shows a rear view of a second detail of the invention;
- Figure 4 shows a rear view of the invention in an operational condition, with some parts removed to better highlight others;
- Figure 5 shows the invention of Figure 4 in an operational condition.

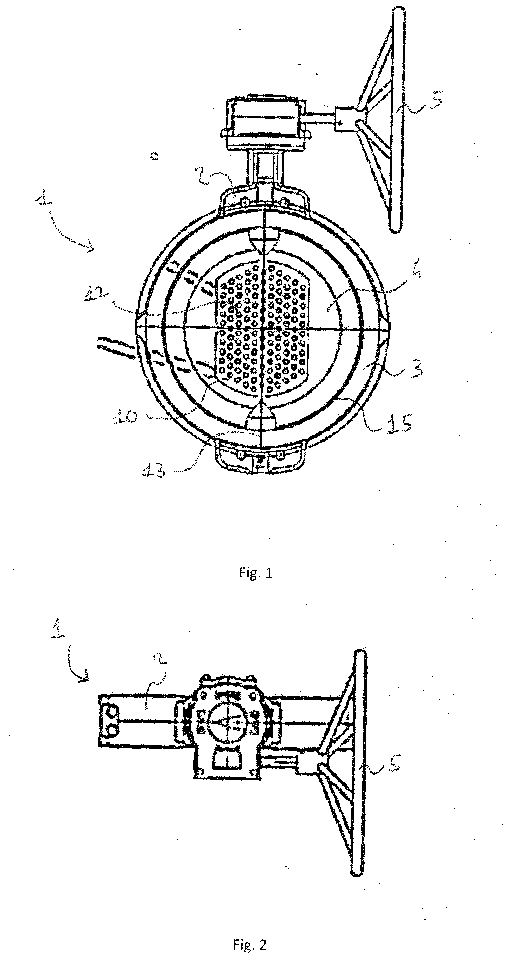

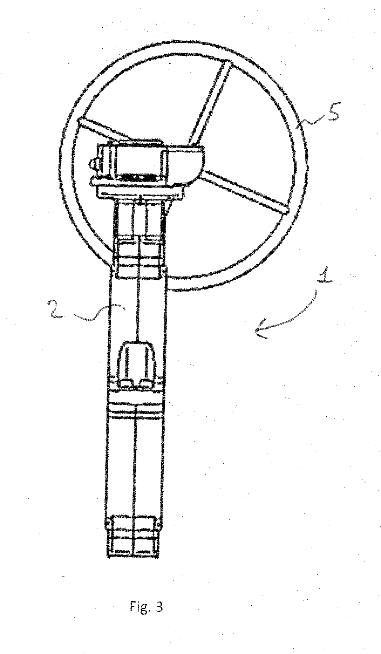

Referring to Figures 1, 2, and 3, a butterfly valve 1 for a chromatographic column 25 can be observed, which comprises a body 2 equipped with a disc 4 rotatably constrained to the body 2. In particular, the disc 4 is a device configured to rotate around an axis 13 perpendicular to the axis of the conduit for which the valve 1 is intended.

The butterfly valve 1 also comprises a fixed perimeter element 3 that delimits the disc 4 peripherally, and at least one seal 15 positioned between the perimeter element 3 and the disc 4.

The body 2 is connected to means 5 of actuation of the valve 1, configured to move it from a filtering position, i.e. the typical "closed" position, wherein the disc 4 is coplanar with the perimeter element 3 and the seal 15 is operative, to a discharge position, i.e. the typical "open" position, wherein the disc 4 rotates around the axis 13, becoming non-coplanar with the perimeter element 3 and rendering the seal 15 non-operative.

The means 5 of actuation can be manual, such as a crank, or automated. In the latter case, the means 5 comprise at least one actuator.

The butterfly valve 1 is configured to be installed within a chromatographic column 25, such that the disc 4 is perpendicular to the axis of the chromatographic column 25 when in the filtering position.

The disc 4 comprises a filter net 10 configured to allow the passage of the analyte or of the active ingredient to be isolated while preventing the passage of the stationary phase, such as silica.

Preferably, the filter net 10 can comprise more than one layer, at least two for example.

The filter net 10 performs better when it comprises between 15 and 20 layers, as it has to withstand a certain pressure, i.e. the weight of the silica, solvent, and analyte.

The different layers can have varying mesh sizes. By way of example and not limitation, the mesh size of the filter net 10 can range between 15 µm and 200 µm.

Preferably, the disc 4 comprises a perforated plate 12 adjacent to the filter net 10. The number and size of the perforations can be adapted depending on the type of analyte or sample to be processed. When the valve 1 is in the filtering position, the filter net 10 faces a bottom portion 26 of the chromatographic column 25, while the perforated plate 12 faces a top portion 27 of the chromatographic column 25. The presence of the perforated plate 12 facilitates the isolation or identification of the analyte.

Preferably, the filter net 10 is removable. This allows for the interchange of filter nets 10 with different mesh sizes using the same butterfly valve 1, resulting in significant cost savings.

The chromatographic column 25 can have a circular or square cross-section, and accordingly, the perimeter element 3 of the valve 1 can have a square cross-section or a ring shape.

The perimeter element 3 can be made of graphite, while the body 2 of the valve 1 can be made of steel, optionally stainless steel, or alloys of chromium, molybdenum, tungsten, and iron.

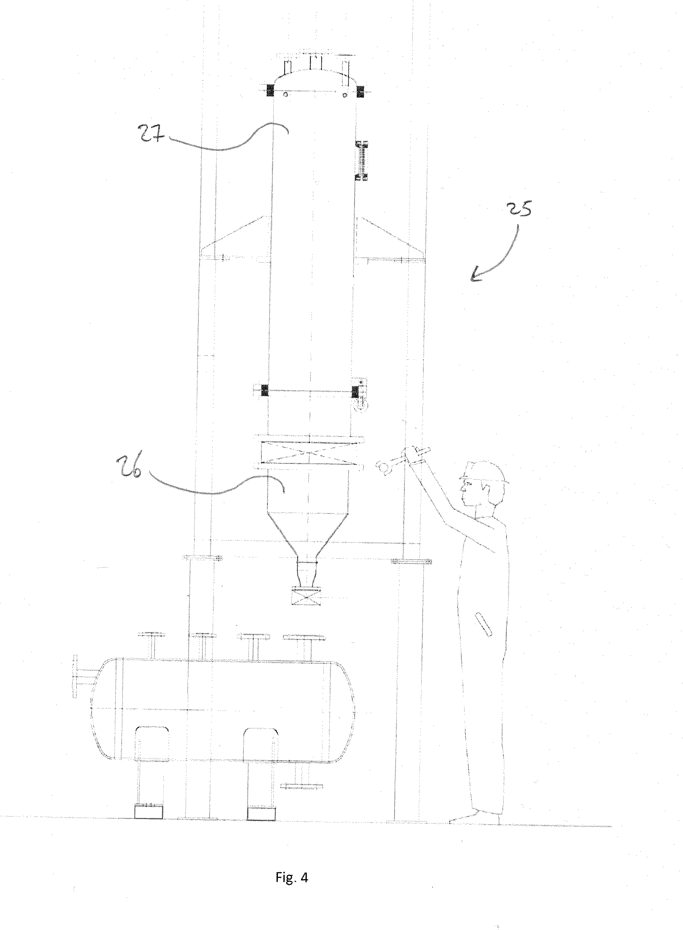

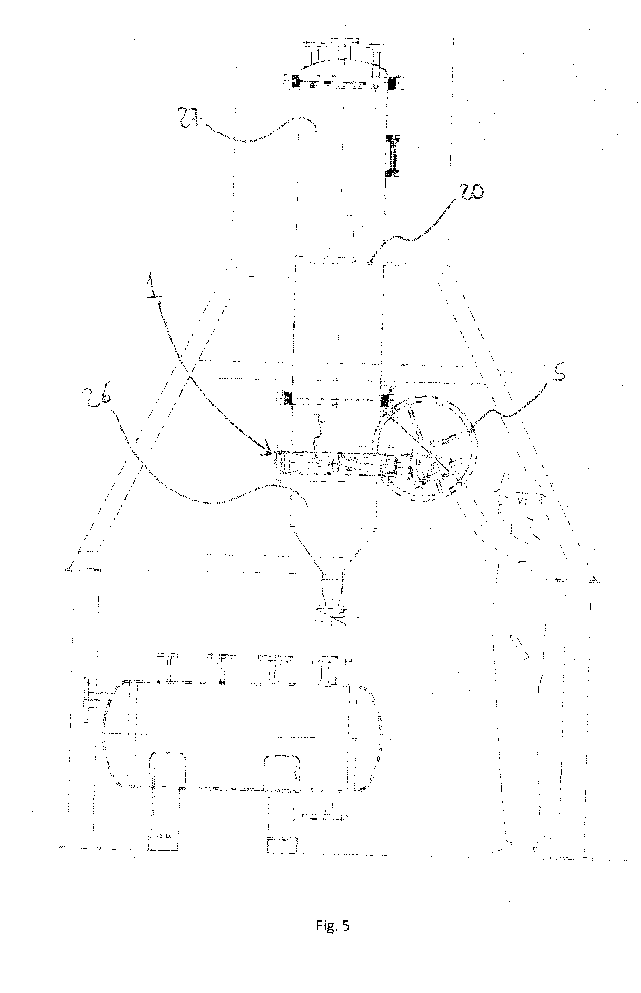

The present invention also refers to a chromatographic column 25, illustrated in Figures 4 and 5, which comprises a butterfly valve 1 as described above, whose functioning is detailed below. For brevity, reference will be made to the identification of an analyte, as the procedure for isolating an active ingredient is similar.

Initially, the butterfly valve 1 is "closed," i.e. in the filtering position. The analyte is introduced via a hopper into the top portion 27 of the chromatographic column 25, wherein the solvent and silica are present. At this point, the solvent transports the analyte through the silica and optionally through the perforated plate 12 of the disc of the valve. Then, the filter net 10 blocks the silica and allows the eluent to pass into the bottom portion 26 of the chromatographic column 25, enabling the identification of the analyte.

After a certain number of cycles, when the silica is exhausted and thus active, the butterfly valve 1 is moved to the discharge position using the means 5 of actuation, either manually or automatically. At this point, the silica moves by gravity to the bottom portion 26 of the chromatographic column 25 and can be correctly disposed of in an appropriate container.

All the operations described so far can be carried out in a closed-loop system, i.e. without dismantling any part of the machinery. Consequently, the replacement of the active silica occurs safely and reliably. Additionally, operators that oversee the process do not need to wear protective equipment, as they never come into contact with the active silica. For this reason, the chromatographic column 25 can be placed in environments without additional safety measures, such as hoods and valves, due to the high safety of the procedure.

Furthermore, the chromatographic column 25 can include a distribution toroid 20 configured to dispense the analyte or sample into the column and/or to carry out a washing and a sterilization of the column once the active silica has been removed and before new silica is inserted.

## Claims

1. Butterfly valve for a chromatographic column comprising a body (2) provided with a disc (4), rotatably constrained to the body (2), with a fixed perimeter element (3) delimiting the disc (4) and with at least a seal positioned between the perimeter element (3) and the disc (4), wherein the body (2) is connected to means (5) of actuation of the valve (1), the valve (1) being **characterized in that** the disc (4) comprises a filter net (10).

2. Butterfly valve according to claim 1, **characterized in that** the filter net (10) comprises at least two layers.

3. Butterfly valve according to claim 2, **characterized in that** the filter net (10) comprises a number of layers ranging between 15 and 20.

4. Butterfly valve according to any one of claims from 1 to 3, **characterized in that** the disc (4) also comprises a perforated plane (12) adjacent to the filter net (10).

5. Butterfly valve according to any one of claims from 1 to 4, **characterized in that** the filter net (10) is removable.

6. Butterfly valve according to any one of claims from 1 to 5, **characterized in that** the perimeter element (4) is made of graphite.

7. Butterfly valve according to any one of claims from 1 to 6, **characterized in that** the perimeter element (4) is a perimeter ring.

8. Chromatographic column **characterized in that** it comprises a butterfly valve (1) according to any one of claims from 1 to 7.

9. Chromatographic column according to claim 8, **characterized by** comprising a distribution toroid (20) configured to dispense an analyte and/or a sample in the column and/or to carry out a washing and a sterilization of the column itself.
